# EUROPEAN PATENT APPLICATION

(11) **EP 3 489 263 A1**
(43) Date of publication of application: **29.05.2019**
(21) Application number: 17830919.1
(22) Date of filing: 12.07.2017
(51) Int. Cl.: C08C 19/02, C08F 236/12

(54) **METHOD FOR SEPARATING CATALYST COMPONENT**

(30) Priority: 20.07.2016 JP 2016142184
(71) Applicant: Zeon Corporation, Tokyo 100-8246 (JP); Saga University, Saga-shi, Saga 840-8502 (JP)
(72) Inventor: NAKAI, Akito, Tokyo 100-8246 (JP); KAWAKITA, Hidetaka, Saga-shi Saga 840-8502 (JP); OHTO, Keisuke, Saga-shi Saga 840-8502 (JP); MORISADA, Shintaro, Saga-shi Saga 840-8502 (JP)
(74) Representative: Maiwald Patent- und Rechtsanwaltsgesellschaft mbH
(86) International application number: PCT/JP2017/025409
(87) International publication number: WO 2018/016400

(57) **Abstract**

Provided is a method of separating a catalyst of a hydrogenated nitrile rubber, the method including: a water-soluble polymer addition step of adding an aqueous solution of a water-soluble polymer to a water-soluble organic solvent solution of the hydrogenated nitrile rubber obtained by hydrogenating a nitrile rubber in the presence of a platinum group element-containing catalyst; and a water-soluble polymer precipitating step of precipitating the water-soluble polymer while incorporating the platinum group element in the water-soluble polymer by stirring the water-soluble organic solvent solution of the hydrogenated nitrile rubber to which the aqueous solution of the water-soluble polymer is added.

## Description

### TECHNICAL FIELD

The present invention relates to a method of separating a platinum group element derived from a platinum group element-containing catalyst from a hydrogenated nitrile rubber.

### BACKGROUND ART

In the past, nitrile rubber (acrylonitrile-butadiene copolymer rubber) has been used as a material for automobile rubber parts, such as hoses and tubes, by making use of its oil resistance, mechanical properties, chemical resistance, and the like. Further, hydrogenated nitrile rubber (hydrogenated acrylonitrile-butadiene copolymer rubber) obtained by hydrogenating the carbon-carbon double bond in the polymer main chain of the nitrile rubber also has excellent heat resistance, and hence is used for rubber parts such as belts, hoses, and diaphragms.

Such a hydrogenated nitrile rubber is produced, for example, by the following production process. That is, a monomer mixture containing an α,β-ethylenically unsaturated nitrile monomer and a conjugated diene monomer is subjected to an emulsion polymerization, a latex of the nitrile rubber obtained by the emulsion polymerization is coagulated and dried, and then the nitrile rubber obtained by the coagulation and drying is dissolved in a water-soluble organic solvent to obtain a water-soluble organic solvent solution of the nitrile rubber. Then, a platinum group element-containing catalyst as a hydrogenation catalyst is added to the water-soluble organic solvent solution of the nitrile rubber, and hydrogenation is carried out (for example, refer to Patent Document 1).

On the other hand, for the hydrogenated nitrile rubber produced by such a production method, there is a problem in that a relatively large amount of the platinum group element derived from the platinum group element-containing catalyst serving as the hydrogenation catalyst remains. This platinum group element has an influence on the progress of the cross-linking reaction when producing a cross-linked rubber by cross-linking the hydrogenated nitrile rubber, causing the characteristics of the resultant cross-linked rubber to deteriorate.

### RELATED ART

### PATENT DOCUMENT

Patent Document 1: National Publication of International Patent Application No. 2015-515532

### SUMMARY OF THE INVENTION

### PROBLEM TO BE SOLVED BY THE INVENTION

The present invention has been made in view of such circumstances, and an object of the present invention is to provide a method of separating a catalyst, the method being capable of suitably separating a platinum group element derived from a platinum group element-containing catalyst from a hydrogenated nitrile rubber.

### MEANS FOR SOLVING THE PROBLEM

The present inventors discovered that by adding an aqueous solution of a water-soluble polymer to a water-soluble organic solvent solution of a hydrogenated nitrile rubber obtained by hydrogenating a nitrile rubber in the presence of a platinum group element-containing catalyst, and then precipitating the water-soluble polymer while incorporating the platinum group element in the water-soluble polymer by stirring, the platinum group element derived from the platinum group element-containing catalyst included in the hydrogenated nitrile rubber can be suitably separated from the hydrogenated nitrile rubber, thereby completing the present invention.

That is, according to the present invention, there is provided a method of separating a catalyst for a hydrogenated nitrile rubber, the method comprising: a water-soluble polymer addition step of adding an aqueous solution of a water-soluble polymer to a water-soluble organic solvent solution of the hydrogenated nitrile rubber obtained by hydrogenating a nitrile rubber in the presence of a platinum group element-containing catalyst; and a water-soluble polymer precipitating step of precipitating the water-soluble polymer while incorporating the platinum group element in the water-soluble polymer by stirring the water-soluble organic solvent solution of the hydrogenated nitrile rubber to which the aqueous solution of the water-soluble polymer is added.

In the method of separating a catalyst according to the present invention, the amino group-containing (meth)acrylate polymer is preferably a homopolymer of N,N-dimethylaminoethyl methacrylate (DMAEMA) or a copolymer of two or more monomers including N,N-dimethylaminoethyl methacrylate (DMAEMA).

In the method of separating a catalyst according to the present invention, the water-soluble polymer preferably has a weight average molecular weight (Mw) of 1,000 to 1,500,000.

In the method of separating a catalyst according to the present invention, a concentration of the water-soluble polymer in the aqueous solution of the water-soluble polymer is preferably 1 to 40% by weight.

In the method of separating a catalyst according to the present invention, an addition amount of the water-soluble polymer is 0.1 to 50 parts by weight with respect to 100 parts by weight of the hydrogenated nitrile rubber.

In the method of separating a catalyst according to the present invention, the water-soluble polymer is preferably an amino group-containing (meth)acrylate polymer.

In the method of separating a catalyst according to the present invention, the platinum group element is preferably palladium.

Further, according to the present invention, there is provided a method of producing a hydrogenated nitrile rubber, the method comprising: a hydrogenation step of hydrogenating a nitrile rubber in the presence of a platinum group element-containing catalyst in a water-soluble organic solvent to obtain a water-soluble organic solvent solution of the hydrogenated nitrile rubber; a water-soluble polymer addition step of adding an aqueous solution of a water-soluble polymer to the water-soluble organic solvent solution of the hydrogenated nitrile rubber; and a water-soluble polymer precipitating step of precipitating the water-soluble polymer while incorporating the platinum group element in the water-soluble polymer by stirring the water-soluble organic solvent solution of the hydrogenated nitrile rubber to which the aqueous solution of the water-soluble polymer is added.

### EFFECTS OF INVENTION

According to the present invention, there is provided a method of separating a catalyst component, the method being capable of suitably separating a platinum group element derived from a platinum group element-containing catalyst from a hydrogenated nitrile rubber.

### DESCRIPTION OF EMBODIMENTS

The method of separating a catalyst component for a hydrogenated nitrile rubber according to the present invention comprises:
a water-soluble polymer addition step of adding an aqueous solution of a water-soluble polymer to a water-soluble organic solvent solution of a hydrogenated nitrile rubber obtained by hydrogenating a nitrile rubber in the presence of a platinum group element-containing catalyst; and
a water-soluble polymer precipitating step of precipitating the water-soluble polymer while incorporating the platinum group element in the water-soluble polymer by stirring the water-soluble organic solvent solution of the hydrogenated nitrile rubber to which the aqueous solution of the water-soluble polymer is added.

Examples of the nitrile rubber used in the present invention include copolymers obtained by copolymerizing a monomer mixture comprising at least an α,β-ethylenically unsaturated nitrile monomer and a conjugated diene monomer.

The α,β-ethylenically unsaturated nitrile monomer is not particularly limited as long as it is an α,β-ethylenically unsaturated compound having a nitrile group. Examples thereof include: acrylonitrile; an α-halogenoacrylonitrile such as α-chloroacrylonitrile and α-bromoacrylonitrile; and an α-alkylacrylonitrile such as methacrylonitrile. Even among these, acrylonitrile and methacrylonitrile are preferable, and acrylonitrile is more preferable. These α,β-ethylenically unsaturated nitrile monomers can be used alone or in combination of two or more.

The content of the α,β-ethylenically unsaturated nitrile monomer unit in the nitrile rubber is, with respect to all the monomer units, 5 to 60% by weight, preferably 10 to 50% by weight, and more preferably 15 to 50% by weight. When the content of the α,β-ethylenically unsaturated nitrile monomer unit is within this range, the cross-linked rubber to be obtained can be made to have excellent cold resistance and oil resistance.

As the conjugated diene monomer, a conjugated diene monomer having 4 to 6 carbon atoms, such as 1,3-butadiene, isoprene, 2,3-dimethyl-1,3-butadiene, 1,3-pentadiene, and chloroprene, is preferable, 1,3-butadiene and isoprene are more preferable, and 1,3-butadiene is particularly preferable. The conjugated diene monomer can be used alone or in combination of two or more.

The content of the conjugated diene monomer unit (including the moiety hydrogenated in the hydrogenation reaction) in the nitrile rubber is, with respect to all the monomer units, preferably 40 to 95% by weight, more preferably 50 to 90% by weight, and further preferably 50 to 85% by weight. When the content of the conjugated diene monomer unit is within this range, the cross-linked rubber to be obtained can be made to have excellent rubber elasticity while maintaining excellent heat resistance and chemical stability.

The nitrile rubber used in the present invention may be a copolymer obtained by copolymerizing, in addition to the α,β-ethylenically unsaturated nitrile monomer and the conjugated diene monomer, another monomer copolymerizable therewith. Examples of such other copolymerizable monomers include an α,β-ethylenically unsaturated monocarboxylic acid monomer, α,β-ethylenically unsaturated polycarboxylic acid monomer, α,β-ethylenically unsaturated monocarboxylic acid ester monomer, α,β-ethylenically unsaturated dicarboxylic acid monoester monomer, ethylene, α-olefin monomer, aromatic vinyl monomer, fluorine-containing vinyl monomer, and copolymerizable antioxidant.

Examples of the α,β-ethylenically unsaturated monocarboxylic acid monomer include acrylic acid, methacrylic acid, ethylacrylic acid, crotonic acid, cinnamic acid, and the like.

Examples of the α,β-ethylenically unsaturated polycarboxylic acid monomer include butenedioic acid such as fumaric acid and maleic acid, itaconic acid, citraconic acid, mesaconic acid, glutaconic acid, allylmalonic acid, teraconic acid, and the like. Further, examples of anhydride of the α,β-unsaturated polycarboxylic acid include maleic anhydride, itaconic anhydride, citraconic anhydride, and the like.

Examples of the α,β-ethylenically unsaturated monocarboxylic acid ester monomer include (meth)acrylic acid esters (an abbreviation for "methacrylic acid esters and acrylic acid esters", same below) having an alkyl group with 1 to 18 carbon atoms, such as methyl acrylate, ethyl acrylate, n-butyl acrylate, isobutyl acrylate, n-dodecyl acrylate, methyl methacrylate, and ethyl methacrylate; (meth)acrylic acid esters having an alkoxyalkyl group with 2 to 18 carbon atoms, such as methoxymethyl acrylate, ethoxypropyl acrylate, methoxybutyl acrylate, ethoxydodecyl acrylate, methoxyethyl methacrylate, methoxybutyl methacrylate, and ethoxypentyl methacrylate; (meth)acrylic acid esters having a cyanoalkyl group with 2 to 12 carbon atoms, such as α-cyanoethyl acrylate, α-cyanoethyl methacrylate, and cyanobutyl methacrylate; (meth)acrylic acid esters having a hydroxyalkyl group with 1 to 12 carbon atoms, such as 2-hydroxyethyl acrylate, 2-hydroxypropyl acrylate, and 2-hydroxyethyl methacrylate; (meth)acrylic acid esters having a fluoroalkyl group with 1 to 12 carbon atoms, such as trifluoroethyl acrylate and tetrafluoropropyl methacrylate; and the like.

Examples of the α,β-ethylenically unsaturated dicarboxylic acid monoester monomer include maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethylcyclopentyl maleate and monoethylcyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethylcyclopentyl fumarate and monoethylcyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethylcyclopentyl citraconate and monoethylcyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; and itaconic acid monoalkyl cycloalkyl esters such as monomethylcyclopentyl itaconate and monoethylcyclohexyl itaconate; and the like.

The α-olefin monomer preferably has 3 to 12 carbon atoms. Examples thereof include propylene, 1-butene, 4-methyl-1-pentene, 1-hexene, 1-octene, and the like.

Examples of the aromatic vinyl monomer include styrene, α-methylstyrene, vinylpyridine, and the like.

Examples of the fluorine-containing vinyl monomer include fluoroethylvinyl ether, fluoropropylvinyl ether, o-trifluoromethyl styrene, vinyl pentafluorobenzoate, difluoroethylene, tetrafluoroethylene, and the like.

Examples of the copolymerizable antioxidant include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, and the like.

Such other monomers which is copolymerizable can be used together. The content of the other monomer unit is, in the nitrile rubber, preferably 50% by weight or less, more preferably 40% by weight or less, and further preferably 10% by weight or less.

The method of producing the nitrile rubber used in the present invention is not particularly limited. For example, the nitrile rubber may be produced by copolymerizing the above-mentioned monomers, and, as necessary, hydrogenating the carbon-carbon double bonds in the obtained copolymer. The polymerization method is not particularly limited. For example, a known emulsion polymerization method or solution polymerization method may be employed. However, from the perspective of industrial productivity, an emulsion polymerization method is preferable. During emulsion polymerization, in addition to an emulsifying agent, a polymerization initiator, and a molecular weight adjuster, secondary polymerization materials that are usually used may be used. The emulsifying agent to be used is not particularly limited, and may be an anionic surfactant, a cationic surfactant, an amphoteric surfactant, a nonionic surfactant, and the like. An anionic surfactant is preferable. These emulsifying agents may be used alone or in combination of two or more. The amount of use is not particularly limited.

The solid concentration of a latex of the nitrile rubber obtained by the emulsion polymerization is not particularly limited, but is generally 2 to 70% by weight and preferably 5 to 60% by weight. The solid concentration may be appropriately adjusted by known methods such as blending, dilution and condensation.

The hydrogenation reaction of the nitrile rubber may be performed on the latex obtained by emulsion polymerization in the latex state as is. However, from view point of the perspective of catalytic activity and the like, it is preferable to obtain a solid-state nitrile rubber by coagulating and drying the latex obtained by emulsion polymerization, dissolve the obtained nitrile rubber in a water-soluble organic solvent, and carry out the hydrogenation reaction in a polymer solution state. Using a water-soluble organic solvent allows the separation of the platinum group element derived from the platinum group element-containing catalyst from the hydrogenated nitrile rubber to be carried out suitably.

The coagulation and drying of the latex may be performed according to a known method, but it is preferable to provide a treatment step of bringing a crumb obtained by coagulation into contact with an alkaline aqueous solution so that the pH of a polymer solution obtained by dissolving the nitrile rubber to be obtained in tetrahydrofuran (THF) exceeds 7. The pH of the polymer solution as measured by dissolving in THF is preferably in the range of 7.2 to 12, more preferably 7.5 to 11.5, and most preferably 8 to 11. By performing a treatment of contacting the crumb with the alkaline aqueous solution enables the hydrogenation in the solution system to proceed more rapidly.

The concentration of the nitrile rubber in the polymer solution during the hydrogenation reaction is preferably 1 to 70% by weight, more preferably 1 to 40% by weight, and particularly preferably 2 to 20% by weight. Examples of the water-soluble organic solvent include ketones such as acetone, methyl ethyl ketone, diethyl ketone, and methyl isopropyl ketone; ethers such as tetrahydrofuran, and dioxane; and esters such as ethyl acetate; and the like. Among these organic solvents, ketones are preferably used, while acetone is particularly preferably used.

When performing the hydrogenation reaction in the present invention, a platinum group element-containing catalyst is used as the hydrogenation catalyst. The platinum group element-containing catalyst may be a catalyst containing any platinum group element, that is, ruthenium, rhodium, palladium, osmium, iridium or platinum, and though not particularly limited, from the viewpoint of catalytic activity and availability, a palladium compound and rhodium compound are preferable, and palladium compound is more preferable. Also, two or more platinum group element compounds may be used in combination, but in this case, likewise, it is preferable that a palladium compound is used as a main catalyst component.

The palladium compound to be used is generally a palladium (II) compound or a palladium (IV) compound. The form of such a compound is a salt or a complex salt.

Examples of the palladium compound include palladium acetate, palladium cyanide, palladium fluoride, palladium chloride, palladium bromide, palladium iodide, palladium nitrate, palladium sulfate, palladium oxide, palladium hydroxide, dichloro(cyclooctadiene) palladium, dichloro(norbornadiene) palladium, dichlorobis(triphenylphosphine) palladium, sodium tetrachloropalladate, ammonium hexachloropalladate, and potassium tetracyanopalladate.

Among these palladium compounds, palladium acetate, palladium nitrate, palladium sulfate, palladium chloride, sodium tetrachloropalladate and ammonium hexachloropalladate are preferable, and palladium acetate, palladium nitrate and palladium chloride are more preferable.

Examples of the rhodium compound include rhodium chloride, rhodium bromide, rhodium iodide, rhodium nitrate, rhodium sulfate, rhodium acetate, rhodium formate, rhodium propionate, rhodium butyrate, rhodium valerate, rhodium naphthenate, rhodium acetylacetonate, rhodium oxide, rhodium trihydroxide, and the like.

In the present invention, as the platinum group element-containing catalyst, the above-mentioned palladium compound or rhodium compound may be used in its original form, or the catalyst components of the above-mentioned palladium compound or rhodium compound may be supported on a carrier to be used as a supported catalyst.

As the carrier for forming a supported catalyst, any carrier of a metal catalyst may be used in general, but specifically, an inorganic compound containing carbon, silicon, aluminum, magnesium, or the like is preferable, and among these as well, from the viewpoint of the fact that the absorption efficiency of the catalyst component such as palladium compound and rhodium compound increases, it is preferable to use a carrier having an average particle diameter of 10 µm to 200 µm and a specific surface area of 200 to 2,000 m²/g.

Such carrier is appropriately selected from known catalyst carriers such as activated carbon, activated clay, talc, clay, alumina gel, silica, diatomaceous earth and synthetic zeolite. As the method for supporting the catalyst component on the carrier, for example, impregnation method, coating method, spraying method and sedimentation method, and the like may be mentioned. The load amount of the catalyst component is generally 0.5 to 80% by weight, preferably 1 to 50% by weight, and more preferably 2 to 30% by weight in terms of the ratio of catalyst component with respect to the total amount of catalyst and carrier. The carrier supporting the catalyst component may be formed in the shape of a sphere, column, polygonal column and honeycomb depending on the type of reactor or the form of reaction.

Further, in the case of using the salt of platinum group element such as palladium compound and rhodium compound as a platinum group element-containing catalyst in its original state without supporting on a carrier, it is preferable to use a stabilizer to stabilize these compounds. By making the stabilizer present in a medium in which a platinum group element-containing catalyst, such as a palladium compound and rhodium compound, is dissolved or dispersed, the nitrile rubber can be hydrogenated with a high hydrogen content.

As the stabilizer, for example, a polymer of vinyl compound having a polar group in a side chain, such as polyvinylpyrrolidone, polyvinyl alcohol, polyvinyl acetal and polyalkylvinylether; a metal salt of polyacrylic acid such as sodium polyacrylate and potassium polyacrylate; a polyether such as polyethylene oxide, polypropylene oxide and ethylene oxide-propylene oxide copolymer; a cellulose derivative such as carboxymethyl cellulose and hydroxypropyl cellulose; and a natural polymer such as gelatin and albumin may be mentioned. Among these, a polymer of vinyl compound having a polar group in a side chain, or a polyether is preferable. Among the polymer of vinyl compound having a polar group in a side chain, polyvinylpyrrolidone and polyalkylvinylether are preferable, while polymethylvinylether is more preferable.

Further, when performing a hydrogenation reaction, a reducing agent may be used in combination. As the reducing agent, for example, hydrazines such as hydrazine, hydrazine hydrate, hydrazine acetate, hydrazine sulfate and hydrazine hydrochloride, or a compound that generates hydrazine existing in a free state may be mentioned.

The temperature for performing a hydrogenation reaction is generally 0 to 200°C, preferably 5 to 150°C, and more preferably 10 to 100°C. By having the temperature for a hydrogenation reaction in this range, any side reaction can be suppressed and the reaction rate can be made sufficient.

A hydrogen pressure when performing a hydrogenation reaction is generally 0.1 to 20 MPa, preferably 0.1 to 15 MPa, and more preferably 0.1 to 10 MPa. Though the reaction time is not particularly limited, it is generally 30 minutes to 50 hours. Also, as for hydrogen gas, it is preferable to replace the reaction system with an inert gas such as nitrogen and then with hydrogen, followed by applying more pressure.

The hydrogenated nitrile rubber has a weight average molecular weight (Mw) of preferably 50,000 to 1,000,000, more preferably 70,000 to 800,000, and further preferably 100,000 to 600,000. The weight average molecular weight (Mw) of the hydrogenated nitrile rubber can be calculated in terms of standard polystyrene using gel permeation chromatography.

Further, when a supported catalyst is used as the platinum group element-containing catalyst, the water-soluble organic solvent solution of the hydrogenated nitrile rubber can be obtained by separating the supported catalyst through filtration, centrifugal separation, and the like.

In addition, in the present invention, an aqueous solution of a water-soluble polymer is added to a water-soluble organic solvent solution of the hydrogenated nitrile rubber obtained in the manner described above, and then stirred. According to the present invention, by adding an aqueous solution of a water-soluble polymer to a water-soluble organic solvent solution of a hydrogenated nitrile rubber, and then stirring, the water-soluble polymer coordinates to a platinum group element included in the water-soluble organic solvent solution of the hydrogenated nitrile rubber, whereby the platinum group element is incorporated in the water-soluble polymer. On the other hand, as the water-soluble polymer undergoes dehydration due to the influence of the water-soluble organic solvent, the water-soluble polymer can be precipitated with the platinum group element still incorporated therein. This enables a hydrogenation catalyst, in particular, a platinum group element derived from a platinum group element-containing catalyst, to be appropriately separated from the hydrogenated nitrile rubber. Further, incorporating the platinum group element in the water-soluble polymer enables the platinum group element to be recovered.

In particular, according to the present invention, when adding the water-soluble polymer to the water-soluble organic solvent solution of the hydrogenated nitrile rubber, the water-soluble polymer is added as an aqueous solution which is dissolved in water. Consequently, the water-soluble polymer can be dispersed highly in the water-soluble organic solvent solution of the hydrogenated nitrile rubber, and as a result, the platinum group element derived from the platinum group element-containing catalyst included in the water-soluble organic solvent solution of the hydrogenated nitrile rubber can be appropriately incorporated in the water-soluble polymer. Further, after the platinum group element has been incorporated, the water-soluble polymer is precipitated by undergoing dehydration due to the influence of the water-soluble organic solvent. The thus-precipitated water-soluble polymer in which a platinum group element has been incorporated can be easily removed by filtration and the like. Accordingly, due to this, the platinum group element derived from the platinum group element-containing catalyst included in the water-soluble organic solvent solution of the hydrogenated nitrile rubber, i.e., the platinum group element derived from the platinum group element-containing catalyst which is included in the hydrogenated nitrile rubber obtained by coagulating the water-soluble organic solvent solution of the hydrogenated nitrile rubber, can be appropriately separated.

The water-soluble polymer used in the present invention is not particularly limited as long as it is water-soluble and is capable of dissolving in water. Examples of such a water-soluble polymer include modifying group-containing (meth)acrylate polymers such as amino group-containing (meth)acrylate polymer (meaning "an amino group-containing methacrylic polymer and/or an amino group-containing acrylic polymer"; hereinafter the same), carboxyl group-containing (meth)acrylate polymer, sulfonic acid group-containing (meth)acrylate polymer, and phosphate group-containing (meth)acrylate polymer; cellulose derivatives such as alkyl cellulose, hydroxyalkyl cellulose, alkyl hydroxyalkyl cellulose; and the like. Among these, from the perspective that affinity with the platinum group element is high and the separation effect of the platinum group element from the hydrogenated nitrile rubber is higher, a modifying group-containing (meth)acrylate polymer is preferable, and an amino group-containing (meth)acrylate polymer is more preferable. Further, from the perspective of appropriately precipitating the water-soluble polymer after incorporating a platinum group element derived from the platinum group element-containing catalyst into the water-soluble polymer, as the water-soluble polymer, an electrically neutral water-soluble polymer (i.e., a water-soluble polymer that is not cationized or anionized) is preferable, and in particular, an electrically neutral amino group-containing (meth)acrylate polymer (i.e., an amino group-containing (meth)acrylate polymer that is not cationized or anionized) is particularly preferable.

The amino group-containing (meth)acrylate polymer is not particularly limited, and may be any polymer that has a (meth)acrylic acid ester unit as a main component and that contains at least an amino group on a portion thereof. Examples of the amino group-containing (meth)acrylate polymer include a homopolymer of an amino group-containing (meth)acrylic acid ester monomer, a copolymer of two or more amino group-containing (meth)acrylic acid ester monomers, a copolymer of one or more amino group-containing (meth)acrylic acid ester monomers and one or more monomers copolymerizable therewith.

Specific examples of the amino group-containing (meth)acrylic acid ester monomer include: aminoalkyl (meth)acrylates such as N,N-dimethylaminoethyl acrylate (DMAEA), N,N-dimethylaminoethyl methacrylate (DMAEMA), N,N-dimethylaminopropyl acrylate, N,N-dimethylaminopropyl methacrylate, N,N-t-butylaminoethyl acrylate, N,N-t-butylaminoethyl methacrylate, N,N-monomethylaminoethyl acrylate, and N,N-monomethylaminoethyl methacrylate; N-aminoalkyl (meth)acrylamides such as N,N-dimethyl acrylamide, N,N-dimethyl methacrylamide, N,N-diethyl acrylamide, N,N-diethyl methacrylamide, N,N-dimethylaminopropyl acrylamide, N,N-dimethylaminopropyl methacrylamide, N,N-dimethylaminoethyl acrylamide, N,N-dimethylaminoethyl methacrylamide, N-isopropylacrylamide; and the like. These amino group-containing (meth)acrylic acid ester monomers may be used alone or in combination of two or more. Of these, aminoalkyl (meth)acrylate is preferable, and N,N-dimethylaminoethyl methacrylate (DMAEMA) is particularly preferable.

Specific examples of the copolymerizable monomers include: unsaturated carboxylic acids such as acrylic acid, methacrylic acid, itaconic acid, maleic acid, fumaric acid, maleic anhydride, itaconic anhydride, and fumaric anhydride; hydroxyl group-containing vinyls such as 2-hydroxyethyl acrylate, hydroxypropyl acrylate, 4-hydroxybutyl acrylate, 2-hydroxyethyl methacrylate, hydroxypropyl methacrylate and 4-hydroxybutyl methacrylate; aromatic vinyls such as styrene, 2-methylstyrene, t-butylstyrene, chlorostyrene, vinylanisole, vinylnaphthalene, and divinylbenzene; amides such as acrylamide, methacrylamide, N-methylolmethacrylamide, N-methylolacrylamide, diacetoneacrylamide, and maleic acid amide; vinyl esters such as vinyl acetate and vinyl propionate; vinylidene halides such as vinylidene chloride and vinylidene fluoride; vinyl chloride, vinyl ether, vinyl ketone, vinylamide, chloroprene, ethylene, propylene, isoprene, butadiene, chloroprene, vinylpyrrolidone, 2-methoxyethyl acrylate, 2-ethoxyethyl acrylate, glycidyl acrylate, glycidyl methacrylate, allyl glycidyl ether, acrylonitrile, methacrylonitrile, ethylene glycol dimethacrylate, diethylene glycol dimethacrylate, triethylene glycol dimethacrylate, polyethylene glycol dimethacrylate, polypropylene glycol dimethacrylate, neopentyl glycol dimethacrylate, 1,3-butylene glycol dimethacrylate, 1,6-hexanediol dimethacrylate, neopentyl glycol dimethacrylate, polyethylene glycol diacrylate, 1,6-hexanediol diacrylate, neopentyl glycol diacrylate, tripropylene glycol diacrylate, polypropylene glycol diacrylate, trimethylolpropane trimethacrylate, trimethylolpropane triacrylate, tetramethylolmethane triacrylate, tetramethylolmethane tetraacrylate, allyl methacrylate, dicyclopentenyl acrylate, dicyclopentenyloxyethyl acrylate, isopropenyl-α,α-dimethylbenzyl isocyanate, allyl mercaptan, and the like. These copolymerizable monomers may be used alone or in combination of two or more.

The content rate of the amino group-containing (meth)acrylic acid ester monomer in the amino group-containing (meth)acrylate polymer is, from the perspective of further enhancing the separation effect of the platinum group element from the hydrogenated nitrile rubber, preferably 30 to 100% by weight, more preferably 50 to 100% by weight, and particularly preferably 70 to 100% by weight.

The weight average molecular weight (Mw) of the water-soluble polymer used in the present invention is, from the perspective of further enhancing the separation effect of the platinum group element from the hydrogenated nitrile rubber, preferably 1,000 to 1,500,000, more preferably 5,000 to 1,200,000, further preferably 10,000 to 1,000,000, even further preferably 20,000 to 1,000,000, still further preferably 100,000 to 1,000,000, particularly preferably 300,000 to 1,000,000, and most preferably 600,000 to 1,000,000. The weight average molecular weight (Mw) of the water-soluble polymer can be calculated in terms of standard polystyrene or standard polyethylene glycol using gel permeation chromatography.

The concentration of the water-soluble polymer in the aqueous solution when adding the water-soluble polymer in an aqueous state to the water-soluble organic solvent solution of the hydrogenated nitrile rubber is, from the perspective of performing the separation of the platinum group element from the hydrogenated nitrile rubber more effectively, preferably 1 to 40% by weight, more preferably 2 to 30% by weight, and further preferably 5 to 20% by weight.

Further, the addition amount of the aqueous solution of the water-soluble polymer when adding the water-soluble polymer in an aqueous state to the water-soluble organic solvent solution of the hydrogenated nitrile rubber is, from the perspective of performing the separation of the platinum group element from the hydrogenated nitrile rubber more effectively, an amount such that the addition amount of the water-soluble polymer is, with respect to 100 parts by weight of the hydrogenated nitrile rubber, preferably 0.1 to 50 parts by weight, more preferably 0.5 to 40 parts by weight, further preferably 1 to 30 parts by weight, and particularly preferably 1 to 5 parts by weight.

The stirring method when adding the water-soluble polymer in an aqueous solution state to the water-soluble organic solvent solution of the hydrogenated nitrile rubber and then stirring is not particularly limited, and for example, a method such as using a stirrer or a method using a shaker may be employed. Further, the stirring conditions when performing the stirring are not particularly limited either. The stirring temperature is preferably 5 to 50°C, and more preferably 10 to 40°C. The stirring rate is preferably 1 to 500 rpm, and more preferably 5 to 100 rpm.

According to the present invention, by adding an aqueous solution of a water-soluble polymer to a water-soluble organic solvent solution of a hydrogenated nitrile rubber, and then stirring, a platinum group element derived from a platinum group element-containing catalyst included in the water-soluble organic solvent solution of the hydrogenated nitrile rubber is incorporated into the water-soluble polymer, and the water-soluble polymer precipitates. As a result, the content of the platinum group element included in the obtained hydrogenated nitrile rubber can be effectively reduced. Specifically, the content of the platinum group element included in the obtained hydrogenated nitrile rubber can be reduced to preferably 50 ppm by weight or less, more preferably 40 ppm by weight or less, and further preferably 30 ppm by weight or less. Further, because the hydrogenated nitrile rubber obtained by the present invention has a reduced platinum group element content, impediment of the progress of a cross-linking reaction due to the platinum group element can be effectively suppressed, and as a result, various characteristics such as heat aging resistance and compression set resistance can be suitably improved.

### EXAMPLES

The present invention will now be described based on even more detailed examples, but the present invention is not limited to these examples. Note that, unless stated otherwise, "parts" are based on weight. The tests and evaluations were conducted as follows.

### Heat Resistance Test

A cross-linkable rubber composition was cross-linked by pressing under pressure using a mold at 170°C for 20 minutes at a pressure of 10 MPa. The obtained cross-linked product was subjected to secondary cross-linking at 170°C for 4 hours to obtain a 20 mm long, 10 mm wide, and 2 mm sheet-shaped cross-linked rubber. This sheet was punched with a JIS No. 3 dumbbell to prepare a test piece. Using the obtained test piece, an air heat aging treatment was carried out at 150°C for 1008 hours in accordance with the provisions of item 4 "Air Heat Aging Test (normal oven method)" of JIS K 6257 "Vulcanized Rubber Aging Test Methods", to measure the elongation at break before and after the air heat aging treatment. Based on this, the rate of change (%) in the elongation at break by the air heat aging treatment was calculated.

### Compression Set Test

A cross-linkable rubber composition was placed in a cylindrical mold having an inner diameter of 29 mm and a depth of 12.5 mm, and then cross-linked by pressing at 170°C for 20 minutes at a pressure of 10 MPa. The obtained cross-linked product was subjected to secondary cross-linking at 170°C for 4 hours to obtain a test piece for a compression set test. Compression set was measured in accordance with JIS K 6262 after holding the test pieces for 168 hours at 150°C in a 25% compressed state.

### Production Example 1

A reactor was charged with 2 parts of potassium oleate, 180 parts of ion-exchanged water, 37 parts of acrylonitrile and 0.5 parts of t-dodecylmercaptan in that order. Next, the reactor was purged with nitrogen, then 63 parts of butadiene was charged thereto. The reactor was cooled to 10°C, and 0.01 part of cumene hydroperoxide and 0.01 part of ferrous sulfate were added. Next, the mixture was stirred for 16 hours while maintaining the reactor at 10°C. After that, 10% by weight of hydroquinone aqueous solution was added to the reactor to stop the polymerization reaction, and then unreacted monomers were removed from the polymerization reaction solution, whereby a latex of acrylonitrile-butadiene copolymer was obtained. The polymerization conversion rate was 90%.

Next, a reactor different from the one mentioned above was charged with 300 parts of coagulating water in which 3 parts of calcium chloride (coagulating agent) was dissolved, and then while stirring at 50°C, the latex obtained above was added dropwise into the coagulating water. After that, a potassium hydroxide aqueous solution was added to cause a polymer crumb to precipitate while maintaining the pH at 11.5. The polymer crumb was collected from the coagulating water, washed in water, and dried under reduced pressure at 50°C. The obtained polymer crumb was then dissolved in acetone to prepare an acetone solution having a polymer content of 15% by weight.

A silica-supported palladium (Pd) catalyst (amount of Pd of 1,000 ppm by weight in terms of "Pd metal/acrylonitrile-butadiene copolymer" ratio) was added to the obtained solution of the acrylonitrile-butadiene copolymer in acetone, the resultant mixture was charged into an autoclave equipped with a stirrer, and nitrogen gas was flowed for 10 minutes to remove dissolved oxygen. Next, the autoclave was purged twice with hydrogen gas, then pressurized to a hydrogen pressure of 5 MPa, the contents were heated to 50°C, and stirred for 6 hours to perform a hydrogenation reaction.

After terminating the hydrogenation reaction, the reaction system was cooled to room temperature, and the hydrogen in the system was purged with nitrogen. The solution of a hydrogenated acrylonitrile-butadiene copolymer obtained by the hydrogenation reaction was then filtered to recover the silica-supported palladium catalyst, whereby a filtered solution of the hydrogenated acrylonitrile-butadiene copolymer was obtained.

### Production Example 2

A solid hydrogenated acrylonitrile-butadiene copolymer was obtained by collecting a portion of the filtered solution of the hydrogenated acrylonitrile-butadiene copolymer obtained in Production Example 1, charging the collected portion into ten times its volume of water to cause the copolymer to precipitate, and then drying the obtained copolymer for 24 hours under vacuum. The amount of palladium in the copolymer of the obtained solid hydrogenated acrylonitrile-butadiene copolymer was measured by atomic absorption to be 145 ppm by weight. Further, the iodine value was 7.4.

### Production Example 3

A reactor was charged with 10 parts of N,N-dimethylaminoethyl methacrylate (DMAEMA) and 37 parts of ion-exchanged water. Next, the reactor was purged with nitrogen, then heated to 75°C, and 0.35 part of ammonium peroxodisulfate were added. The contents were then stirred for 1 hour while maintaining the reactor at 75°C. The resultant polymer aqueous solution was dropped into acetone to precipitate the polymer. The polymer was then collected from the acetone, washed with acetone, and dried under reduced pressure at 50°C to obtain a solid water-soluble polymer (A-1) (poly(N,N-dimethylaminoethyl methacrylate)). The weight average molecular weight (Mw) in terms of polystyrene of the obtained water-soluble polymer (A-1) was measured by GPC measurement to be 500,000. Further, 1 part of the obtained water-soluble polymer (A-1) was dissolved in 10 parts of ion-exchanged water to obtain an aqueous solution of the water-soluble polymer (A-1) (concentration of the water-soluble polymer (A-1): 9.1% by weight).

### Production Example 4

A solid water-soluble polymer (A-2) (poly(N,N-dimethylaminoethyl methacrylate)) was obtained by performing the same operations as in Production Example 3, except that the amount of N,N-dimethylaminoethyl methacrylate (DMAEMA) used was changed from 10 parts to 1 part. The weight average molecular weight (Mw) in terms of polystyrene of the obtained water-soluble polymer (A-2) was measured by GPC measurement to be 27,000. Further, 1 part of the obtained water-soluble polymer (A-2) was dissolved in 10 parts of ion-exchanged water to obtain an aqueous solution of the water-soluble polymer (A-2) (concentration of the water-soluble polymer (A-2): 9.1% by weight).

### Production Example 5

A solid water-soluble polymer (A-3) (poly(N,N-dimethylaminoethyl methacrylate)) was obtained by performing the same operations as in Production Example 3, except that the amount of N,N-dimethylaminoethyl methacrylate (DMAEMA) used was changed from 10 parts to 20 parts. The weight average molecular weight (Mw) in terms of polystyrene of the obtained water-soluble polymer (A-3) was measured by GPC measurement to be 800,000. Further, 1 part of the obtained water-soluble polymer (A-3) was dissolved in 10 parts of ion-exchanged water to obtain an aqueous solution of the water-soluble polymer (A-3) (concentration of the water-soluble polymer (A-3): 9.1% by weight).

### Example 1

A portion of the filtered solution of the hydrogenated acrylonitrile-butadiene copolymer obtained in Production Example 1 was collected and placed in a vial. Acetone was added to the vial to adjust the concentration of the hydrogenated acrylonitrile-butadiene copolymer to 8% by weight. Then, 25 parts of the aqueous solution of the water-soluble polymer (A-1) obtained in Production Example 3 (2.275 parts in terms of the water-soluble polymer (A-1)) was added to 100 parts of the hydrogenated acrylonitrile-butadiene copolymer. Next, using a shaker (trade name "RECIPRO SHAKER SR-1", manufactured by TAITEC Corporation), stirring was carried out for 24 hours at 25°C at 120 rpm. As a result of the stirring for 24 hours, the water-soluble polymer (A-1) had turned into a solid, and had sedimented. Next, the water-soluble polymer (A-1) was recovered by filtration, and the filtrate was charged into a ten-fold amount of water to cause the hydrogenated acrylonitrile-butadiene copolymer to precipitate. The resultant hydrogenated acrylonitrile-butadiene copolymer was dried for 24 hours in a vacuum dryer, whereby a solid hydrogenated acrylonitrile-butadiene copolymer was obtained. Further, the amount of palladium in the copolymer of the obtained solid hydrogenated acrylonitrile-butadiene copolymer was measured by atomic absorption to be 12 ppm by weight. The recovery rate of the palladium used in the hydrogenation reaction was 92% by weight.

It is noted that the palladium recovery rate was calculated based on "palladium recovery rate (%) = (amount of palladium before treatment with the water-soluble polymer aqueous solution - amount of palladium after treatment with the water-soluble polymer aqueous solution) / amount of palladium before treatment with the water-soluble polymer aqueous solution × 100" (the same applies in Examples 2 to 6 described below).

Using the obtained hydrogenated acrylonitrile-butadiene copolymer, a cross-linkable rubber composition was obtained by the following method. Specifically, 5 parts of zinc white, 1 part of stearic acid, 70 parts of SRF carbon black (trade name "Asahi #50", manufactured by Asahi Carbon Co., Ltd.), 5 parts of a plasticizer (trade name "ADEKA CIZER C-8", manufactured by ADEKA CORPORATION), 1.5 parts of substituted diphenylamine (trade name "Naugard 445", manufactured by Uniroyal Co., antioxidant), 1.5 parts of 2-mercaptobenzimidazole zinc salt (trade name: "Nocrac MBZ" manufactured by Ouchi Shinko Chemical Industrial Co., Ltd., antioxidant), and 7 parts of a 40% product of 1,3-bis (t-butylperoxyisopropyl)benzene (organic peroxide) (trade name "VULCUP 40KE" manufactured by Hercules Inc.) were blended and kneaded into 100 parts of the hydrogenated acrylonitrile-butadiene copolymer to obtain a cross-linkable rubber composition.

The obtained cross-linkable rubber composition was evaluated based on the heat resistance test and the compression set test carried out in accordance with the methods described above. The results are shown in Table 1.

### Example 2

A solid hydrogenated acrylonitrile-butadiene copolymer was obtained by performing the same operations as in Example 1, except that the amount of the aqueous solution of the water-soluble polymer (A-1) used was changed from 25 parts to 15 parts (1.365 parts in terms of the water-soluble polymer (A-1)). The amount of palladium in the copolymer of the obtained solid hydrogenated acrylonitrile-butadiene copolymer was measured by atomic absorption to be 25 ppm by weight. The recovery rate of the palladium used in the hydrogenation reaction was 83% by weight. Further, using the obtained hydrogenated acrylonitrile-butadiene copolymer, a cross-linkable rubber composition was obtained and evaluated in the same manner as in Example 1. The results are shown in Table 1.

### Example 3

A solid hydrogenated acrylonitrile-butadiene copolymer was obtained by performing the same operations as in Example 1, except that instead of 25 parts of the aqueous solution of the water-soluble polymer (A-1), 25 parts of the aqueous solution of the water-soluble polymer (A-2) obtained in Production Example 4 (2.275 parts in terms of the water-soluble polymer (A-2)) was used. The amount of palladium in the copolymer of the obtained solid hydrogenated acrylonitrile-butadiene copolymer was measured by atomic absorption to be 8 ppm by weight. The recovery rate of the palladium used in the hydrogenation reaction was 95% by weight. Further, using the obtained hydrogenated acrylonitrile-butadiene copolymer, a cross-linkable rubber composition was obtained and evaluated in the same manner as in Example 1. The results are shown in Table 1.

### Example 4

A solid hydrogenated acrylonitrile-butadiene copolymer was obtained by performing the same operations as in Example 3, except that the amount of the aqueous solution of the water-soluble polymer (A-2) used was changed from 25 parts to 15 parts (1.365 parts in terms of the water-soluble polymer (A-2)). The amount of palladium in the copolymer of the obtained solid hydrogenated acrylonitrile-butadiene copolymer was measured by atomic absorption to be 15 ppm by weight. The recovery rate of the palladium used in the hydrogenation reaction was 90% by weight. Further, using the obtained hydrogenated acrylonitrile-butadiene copolymer, a cross-linkable rubber composition was obtained and evaluated in the same manner as in Example 3. The results are shown in Table 1.

### Example 5

A solid hydrogenated acrylonitrile-butadiene copolymer was obtained by performing the same operations as in Example 1, except that instead of 25 parts of the aqueous solution of the water-soluble polymer (A-1), 25 parts of the aqueous solution of the water-soluble polymer (A-3) obtained in Production Example 5 (2.275 parts in terms of the water-soluble polymer (A-3)) was used. The amount of palladium in the copolymer of the obtained solid hydrogenated acrylonitrile-butadiene copolymer was measured by atomic absorption to be 4 ppm by weight. The recovery rate of the palladium used in the hydrogenation reaction was 97% by weight. Further, using the obtained hydrogenated acrylonitrile-butadiene copolymer, a cross-linkable rubber composition was obtained and evaluated in the same manner as in Example 1. The results are shown in Table 1.

### Example 6

A solid hydrogenated acrylonitrile-butadiene copolymer was obtained by performing the same operations as in Example 5, except that the amount of the aqueous solution of the water-soluble polymer (A-3) used was changed from 25 parts to 15 parts (1.365 parts in terms of the water-soluble polymer (A-3)). The amount of palladium in the copolymer of the obtained solid hydrogenated acrylonitrile-butadiene copolymer was measured by atomic absorption to be 7 ppm by weight. The recovery rate of the palladium used in the hydrogenation reaction was 95% by weight. Further, using the obtained hydrogenated acrylonitrile-butadiene copolymer, a cross-linkable rubber composition was obtained and evaluated in the same manner as in Example 5. The results are shown in Table 1.

### Comparative Example 1

A cross-linkable rubber composition was obtained and evaluated in the same manner as in Example 1, except that the solid hydrogenated acrylonitrile-butadiene copolymer obtained in Example 2 was used as is (i.e., a solid hydrogenated acrylonitrile-butadiene copolymer was obtained without adding an aqueous solution of the water-soluble polymer). The results are shown in Table 1.

### [Table 1]

**Table 1**

| | | | Example | | | | | | Comparative Example |
|---|---|---|---|---|---|---|---|---|---|
| | | | 1 | 2 | 3 | 4 | 5 | 6 | 1 |
| Pd Separation Operation | | | | | | | | | |
| | Hydrogenated acrylonitrile-butadiene copolymer | (parts) | 100 | 100 | 100 | 100 | 100 | 100 | 100 |
| | Aqueous solution of water-soluble polymer (A-1) (Mw=500,000) | (parts) | 25 | 15 | - | - | - | - | - |
| | Aqueous solution of water-soluble polymer (A-2) (Mw=27,000) | (parts) | - | - | 25 | 15 | - | - | - |
| | Aqueous solution of water-soluble polymer (A-3) (Mw=800,000) | (parts) | - | - | - | - | 25 | 15 | - |
| | Amount of Pd in copolymer | (ppm by weight) | 12 | 25 | 8 | 15 | 4 | 7 | 145 |
| | Pd recovery rate | (% by weight) | 92 | 83 | 95 | 90 | 97 | 95 | - |

| Evaluation of cross-linked rubber | | | | | | | | | |
|---|---|---|---|---|---|---|---|---|---|
| | Elongation change rate after heat aging | (%) | -20 | -22 | -18 | -21 | -17 | -20 | -30 |
| | Compression set | (%) | 25 | 28 | 23 | 25 | 21 | 23 | 35 |

As shown in Table 1, from the results of Examples 1 to 6, it can be confirmed that by adding an aqueous solution of the water-soluble polymer and then stirring, the palladium can be suitably separated from the hydrogenated nitrile rubber. Further, the thus-obtained cross-linked rubbers of Examples 1 to 6 showed better heat aging resistance and compression set resistance compared with the cross-linked rubber of Comparative Example 1 in which the palladium was not separated.

## Claims

1. A method of separating a catalyst component for a hydrogenated nitrile rubber, the method comprising:
a water-soluble polymer addition step of adding an aqueous solution of a water-soluble polymer to a water-soluble organic solvent solution of a hydrogenated nitrile rubber obtained by hydrogenating a nitrile rubber in the presence of a platinum group element-containing catalyst; and
a water-soluble polymer precipitating step of precipitating the water-soluble polymer while incorporating the platinum group element in the water-soluble polymer by stirring the water-soluble organic solvent solution of the hydrogenated nitrile rubber to which the aqueous solution of the water-soluble polymer is added.

2. The method of separating a catalyst component for a hydrogenated nitrile rubber according to claim 1, wherein the water-soluble polymer is an amino group-containing (meth)acrylate polymer.

3. The method of separating a catalyst component for a hydrogenated nitrile rubber according to claim 2, wherein the amino group-containing (meth)acrylate polymer is a homopolymer of N,N-dimethylaminoethyl methacrylate (DMAEMA) or a copolymer of two or more monomers including N,N-dimethylaminoethyl methacrylate (DMAEMA).

4. The method of separating a catalyst component for a hydrogenated nitrile rubber according to any of claims 1 to 3, wherein the water-soluble polymer has a weight average molecular weight (Mw) of 1,000 to 1,500,000.

5. The method of separating a catalyst component for a hydrogenated nitrile rubber according to any of claims 1 to 4, wherein a concentration of the water-soluble polymer in the aqueous solution of the water-soluble polymer is 1 to 40% by weight.

6. The method of separating a catalyst component for a hydrogenated nitrile rubber according to any of claims 1 to 5, wherein an addition amount of the water-soluble polymer is 0.1 to 50 parts by weight with respect to 100 parts by weight of the hydrogenated nitrile rubber.

7. The method of separating a catalyst component for a hydrogenated nitrile rubber according to any of claims 1 to 6, wherein the platinum group element is palladium.

8. A method of producing a hydrogenated nitrile rubber, the method comprising:
a hydrogenation step of hydrogenating a nitrile rubber in the presence of a platinum group element-containing catalyst in a water-soluble organic solvent to obtain a water-soluble organic solvent solution of the hydrogenated nitrile rubber;
a water-soluble polymer addition step of adding an aqueous solution of a water-soluble polymer to the water-soluble organic solvent solution of the hydrogenated nitrile rubber; and
a water-soluble polymer precipitating step of precipitating the water-soluble polymer while incorporating the platinum group element in the water-soluble polymer by stirring the water-soluble organic solvent solution of the hydrogenated nitrile rubber to which the aqueous solution of the water-soluble polymer is added.
